**Europäisches Patentamt**

**European Patent Office**

**Office européen des brevets**

(11) Veröffentlichungsnummer: **0 135 825
B1**

# EUROPÄISCHE PATENTSCHRIFT

(45) Veröffentlichungstag der Patentschrift:
**03.08.88**

(21) Anmeldenummer: **84110167.8**

(22) Anmeldetag: **25.08.84**

(51) Int. Cl.⁴: **C 08 G 59/14,** C 08 G 18/58,
C 08 G 18/71, C 09 D 3/66,
C 09 D 3/81, C 08 L 33/00,
C 08 L 67/08 // (C08L33/00,
63:00),(C08L67/08, 63:00)

(54) **Verfahren zur Herstellung von Einbrennlacken auf Basis von Acrylat- und Alkydharzen unter Mitverwendung modifizierter Epoxidharze.**

(30) Priorität: **28.09.83 DE 3334996**

(43) Veröffentlichungstag der Anmeldung:
**03.04.85 Patentblatt 85/14**

(45) Bekanntmachung des Hinweises auf die Patenterteilung:
**03.08.88 Patentblatt 88/31**

(84) Benannte Vertragsstaaten:
**DE FR GB NL**

(56) Entgegenhaltungen:
DE - A - 3 008 305
FR - A - 1 466 892
FR - A - 2 012 673
FR - A - 2 014 164
FR - A - 2 077 061
GB - A - 747 607
GB - A - 2 007 672

**Die Akte enthält technische Angaben, die nach dem
Eingang der Anmeldung eingereicht wurden und die
nicht in dieser Patentschrift enthalten sind.**

(73) Patentinhaber: **SCHERING AKTIENGESELLSCHAFT
Berlin und Bergkamen, Waldstrasse 14 Postfach 15 40,
D-4709 Bergkamen (DE)**

(72) Erfinder: **Burba, Christian, Dr. Dipl.-Chem.,
Gerhart-Hauptmann-Strasse 9,
D-4715 Ascheberg-Herbern (DE)**
Erfinder: **Skoda, Hans-Dieter, Schäferstrasse 39 a,
D-4708 Kamen (DE)**

**Beschreibung**

Gegenstand der Erfindung ist ein Verfahren zur Herstellung von Einbrennlacken auf Basis von Acrylat- und Alkydharzen unter Mitverwendung von festen Epoxidharzen, deren Hydroxylgruppengehalt durch Additionsreaktionen der Hydroxylgruppe mit monofunktionellen Isocyanaten teilweise vermindert wurde.

Acrylatharze und Alkydharze werden aufgrund ihrer guten mechanischen und chemischen Eigenschaften seit langem mit Erfolg als Einbrennlacke auf dem Gebiet des Oberflächenschutzes eingesetzt.

Zur Verbesserung von Haftungs- und Oberflächeneigenschaften sowie zur Erhöhung der Chemikalienbeständigkeit werden bereits feste Epoxidharze zugesetzt. Diese Zusätze zeigen aber wegen ihrer Unverträglichkeit häufig Grauschleier und Mattierungen in den Filmen. Durch Zusatz verschiedener Additive und Hilfsmittel, wie insbesondere Lösungsvermittler, wurde bereits versucht, diesen negativen Effekt zu beseitigen. Bei einigen speziellen Acrylat- und Alkydharztypen konnten graduelle Verbesserungen, die jedoch noch nicht den Anforderungen der Praxis entsprechen, erzielt werden. Nachteilig bei diesem Lösungsweg ist, dass er sich nur auf die speziellen Harze bezieht und nicht allgemein anwendbar ist.

Der Erfindung liegt die Aufgabe zugrunde, diese Nachteile des Standes der Technik zu beseitigen und ein Verfahren zur Herstellung von Einbrennlacken bereitzustellen, welches auf eine Vielzahl handelsüblicher Acrylat- und Alkydharze anwendbar ist.

Diese Aufgabe wird erfindungsgemäss gelöst durch ein Verfahren zur Herstellung von Einbrennlacken auf Basis von Acrylat- und Alkydharzen unter Mitverwendung von Epoxidharzen, welches dadurch gekennzeichnet ist, dass als Epoxidharze Umsetzungsprodukte aus

A) festen Epoxidharzen mit Äquivalentgewichten von 400 bis 1000 mit

B) monofunktionellen Isocyanaten
verwendet werden.

Eine bevorzugte Ausführungsform ist dadurch gekennzeichnet, dass als Epoxidharz Umsetzungsprodukte aus

A) festen Epoxidharzen mit Äquivalentgewichten von 400–550 mit

B) Phenylisocyanat
verwendet werden.

Weitere bevorzugte Ausführungsformen sind die in den Ansprüchen gekennzeichneten Gegenstände.

Ein weiterer Gegenstand der Erfindung ist die Verwendung der Umsetzungsprodukte aus

A) festen Epoxidharzen mit Äquivalentgewichten von 400 bis 1000 mit

B) monofunktionellen Isocyanaten
für das Verfahren zur Herstellung von Einbrennlacken.

Die erfindungsgemäss mitverwendeten, gegebenenfalls modifizierten festen Glycidylverbindungen sind handelsübliche Produkte mit mehr als einer Epoxidgruppe pro Molekül, die sich von ein- oder mehrkernigen Phenolen, insbesondere Bisphenolen, sowie Novolaken ableiten. Eine umfangreiche Aufzählung dieser Di- oder Polyphenole findet sich in dem Handbuch «Epoxidverbindungen und Epoxidharze» von A.M. Paquin, Springer Verlag, Berlin, 1958, Kapitel IV, und Lee, Neville «Handbook of Epoxy Resins», 1967, Chapter 2.

Es können auch Mischungen von zwei oder mehreren der Epoxidharze untereinander verwendet werden. Bevorzugt werden feste Glycidyläther auf Basis von Bisphenol A (4,4'-Dihydroxydiphenylpropan-2,2) oder Bisphenol F (4,4'-Dihydroxy-diphenylmethan) mit Äquivalentgewichten von ca. 400 bis ca. 1000, insbesondere zwischen ca. 400–550, eingesetzt.

Die Hydroxylgruppen der Epoxidharze werden teilweise durch Additionsreaktionen nach an sich bekannten Methoden mit Monoisocyanaten oder Verbindungen, welche noch eine freie Isocyanatgruppe im Molekül enthalten, umgesetzt.

Vorzugsweise werden niedermolekulare aromatische und cycloaliphatische Isocyanate wie Phenylisocyanat, Cyclohexylisocyanat, Isocyanatoäthylmethacrylat und Umsetzungsprodukte aus 1 Mol eines niedermolekularen Diisocyanats mit 1 Mol eines monofunktionellen Alkohols wie z.B. 1 Mol Isophorondiisocyanat und 1 Mol Isopropanol eingesetzt. Zur Erzielung besonderer Effekte ist es jedoch auch möglich, die bekannten präpolymeren Isocyanate, d.h., Umsetzungsprodukte aus Diisocyanaten und Diolen und anschliessender Umsetzung mit 1 Mol eines monofunktionellen Alkohols, allein oder in Mischung mit niedermolekularen Monoisocyanaten mitzuverwenden.

Neben der Isocyanatgruppe können noch weitere funktionelle Gruppen – vorausgesetzt, sie sind bei Raumtemperatur nicht mit der Epoxidgruppe reaktiv – im Molekül vorhanden sein, wie Carbonsäuregruppen, Carbonsäureanhydridgruppen, Amidgruppen, Äthergruppen, Estergruppen und insbesondere Silan- bzw. Silanalkoxygruppen, Epoxidgruppen und Doppelbindungen wie Vinyl- oder Allylgruppen.

Die Isocyanate werden in Mengen eingesetzt, die zur Umsetzung von 10%–90%, vorzugsweise 30%–70%, der Hydroxylgruppen der Epoxidverbindungen erforderlich sind.

Da in der Praxis vom Anwender ein bestimmter Festkörpergehalt und eine bestimmte Viskosität der Epoxidharzlösung verlangt werden, werden erfindungsgemäss solche Umsetzungsprodukte aus Epoxidharz und Isocyanat bevorzugt, deren Viskositäten in der Nähe der Ausgangsprodukte liegen.

Die Auswahl der Monoisocyanate und des Umsetzungsgrads erfolgt daher nicht nur unter dem Gesichtspunkt der Verträglichkeit des Reaktionsprodukts mit Acrylat- bzw. Alkydharzen, sondern auch unter besonderer Beachtung der Viskosität der Umsetzungsprodukte.

Als Lösungsmittel für die festen Epoxidharze kommen aromatische Kohlenwasserstoffe wie z.B. Toluol, Xylol; Ester, wie Äthylacetat, Butylacetat, Äthylglykolacetat; Äther wie Dioxan, Tetrahydrofuran; Ketone wie Methylisobutylketon; sowie deren Mischungen in Betracht. Nach der Umsetzung mit Monoisocyanaten können auch Alkohole wie n-Butanol oder iso-Butanol mitverwendet werden. Voraussetzung für die Verwendung der o.a. Lösungsmittel bzw. Lösungsmittelgemische ist, dass sie mit den modifizierten Epoxidharzen homogene Lösungen bilden.

Bevorzugt werden 75%ige Lösungen in einer Mischung aus 75% Xylol und 25% Butylacetat.

Die erfindungsgemäss verwendeten modifizierten Epoxidharze zeichnen sich durch eine besonders gute Verträglichkeit mit Acrylatharzen und auch den problematischeren Alkydharzen aus. Dabei ist für die Praxis insbesondere von Bedeutung, dass diese Verträglichkeit sich nicht auf ein spezielles Produkt beschränkt, sondern für die überwiegende Zahl der bekannten Handelsprodukte zutrifft. Im Bedarfsfalle kann eine erforderlich werdende Modifizierung durch Variierung des Umsetzungsgrades oder der Monoisocyanatkomponente schnell und problemlos erfolgen. In der Regel genügt eine begrenzte Zahl von Orientierungsversuchen, so dass die bisher erforderliche zeitraubende und mühsame Abstimmung einer u.U. Vielzahl von Komponenten nicht mehr erforderlich ist.

Die Acrylat- und Alkydharze, mit denen die erfindungsgemäss verwendeten modifizierten Epoxidharze verträglich sind, sind die handelsüblichen selbstvernetzenden und wärmehärtenden Typen.

Herstellung eines Epoxid-Festharzes
1680 g Bisphenol-A-diglycidyläther (Epoxid-Äquivalentgew. von 185) und
 420 g Bisphenol-A
werden bei 100 °C in einem Rührwerk homogenisiert.
   Nach Zugabe von
0,4 g Benzyltrimethylammoniumchlorid
wird bei 170 °C in ca. 3 Stunden das Festharz mit einem Äquivalentgewicht von 400–440 hergestellt. Nach Abkühlen setzt man unter Rühren
585 g Xylol und
195 g Butylacetat
zu.

Herstellung des modifizierten Epoxidharzes
   1. Bei 60–65 °C werden dann zu dem oben hergestellten Festharz 220 g Phenylisocyanat gegeben und bis zum Verschwinden der N=C=O-Funktion umgesetzt.
   Das Reaktionsprodukt hat folgende Kennzahlen:
Epoxid-Äquivalentgewicht ca. 667
Viskosität            ca. 6,8 Pa · s bei 25 °C.
   2. Entsprechend Beispiel 1 wird unter Einsatz von 92 g Phenylisocyanat ein Harz erhalten mit folgenden Kennzahlen:
Epoxid-Äquivalentgewicht ca. 625
Viskosität            ca. 5,4 Pa · s bei 25 °C.
   3. Entsprechend Beispiel 1 wird unter Einsatz von 320 g Phenylisocyanat ein Harz erhalten mit folgenden Kennzahlen:
Epoxid-Äquivalentgewicht ca. 556
Viskosität            ca. 15 Pa · s bei 25 °C.
   4. Entsprechend Beispiel 1 wird unter Einsatz von 189 g Isocyanatoäthylmethacrylat ein Harz erhalten mit folgenden Kennzahlen:
Epoxid-Äquivalentgewicht ca. 556
Viskosität            ca. 7,5 Pa · s bei 25 °C.
   5. Entsprechend Beispiel 1 wird unter Einsatz von 109 g Isocyanatoäthylmethacrylat ein Harz erhalten mit folgenden Kennzahlen:
Epoxid-Äquivalentgewicht ca. 588
Viskosität            ca. 6,0 Pa · s bei 25 °C.
   6. Entsprechend Beispiel 1 wird unter Einsatz von 378 g Isocyanatoäthylmethacrylat ein Harz erhalten mit folgenden Kennzahlen:
Epoxid-Äquivalentgewicht ca. 556
Viskosität            ca. 16,4 Pa · s bei
                         25 °C.

Die Produkte der Beispiele 1–6 wurden als 75%ige Lösungen in Xylol/Butylacetat (3 : 1) für die Verträglichkeitsprüfungen eingesetzt.

Zur Prüfung der verbesserten Verträglichkeit werden handelsübliche Acrylat- bzw. Alkydharze mit 5–10 Gew.-% der nach 1–6 hergestellten isocyanatmodifizierten Epoxidharze versetzt und auf eine klare Mischung bei Raumtemperatur untersucht (Kontrollversuche mit unmodifiziertem Epoxidharz ergaben nur trübe Mischungen. Das Vergleichsbeispiel zeigt ein unmodifiziertes standardisiertes festes Epoxidharz mit einem Epoxidäquivalentgewicht von ca. 445–500).

## Tabelle

| Bei-spiel | Zusatz-menge | Acrylatharze | | |
|---|---|---|---|---|
| | | Larodur® 150 | Larodur® 151 | Synedol® 1033 |
| 1 | 5% | + + | + + | + + |
| | 10% | + + | + + | + + |
| 2 | 5% | + + | + + | + + |
| A | 10% | 0 | 0 | + + |
| 3 | 5% | + + | + + | + + |
| | 10% | + + | + + | + + |

Tabelle (Fortsetzung)

| Bei-spiel | Zusatz-menge | Acrylatharze Larodur® 150 | Larodur® 151 | Synedol® 1033 |
|---|---|---|---|---|
| 4 | 5% | + + | + + | + + |
| | 10% | + + | + + | + + |
| B 5 | 5% | + + | + + | + + |
| | 10% | 0 | 0 | + + |
| 6 | 5% | + + | + + | + + |
| | 10% | + + | + + | + + |
| Vergl.-beispiel | 10% | – | – | – |

| Bei-spiel | Zusatz-menge | Alkydharze Alftalat® AR 351 | Alftalat® AM 424 | Alkydal® R 40 |
|---|---|---|---|---|
| A 1 | 5% | + + | + + | + + |
| | 10% | + + | + + | + + |
| B 4 | 5% | + + | + + | + + |
| | 10% | + + | + + | + |
| Vergl.-beispiel | 10% | – | – | – |

| | |
|---|---|
| A | = Phenylisocyanat |
| B | = Isocyanatoäthylmethacrylat |
| ® | = eingetragenes Warenzeichen |
| + + | = klar |
| + | = fast klar |
| 0 | = leicht trübe |
| – | = stark trübe |

**Patentansprüche**

1. Verfahren zur Herstellung von Einbrennlakken auf Basis von Acrylat- und Alkydharzen unter Mitverwendung von Epoxidharzen, dadurch gekennzeichnet, dass als Epoxidharze Umsetzungsprodukte aus

A) festen Epoxidharzen mit Äquivalentgewichten von 400 bis 1000 mit

B) monofunktionellen Isocyanaten
verwendet werden.

2. Verfahren zur Herstellung von Einbrennlakken gemäss Anspruch 1, dadurch gekennzeichnet, dass als Epoxidharze Umsetzungsprodukte aus

A) festen Epoxidharzen mit Äquivalentgewichten von 400–550 mit

B) Phenylisocyanat
verwendet werden.

3. Verfahren zur Herstellung von Einbrennlakken gemäss den Ansprüchen 1 und 2, dadurch gekennzeichnet, dass als Epoxidharze gemäss A) feste Glycidyläther auf Basis von 4,4'-Dihydroxydiphenylpropan-2,2 verwendet werden.

4. Verfahren zur Herstellung von Einbrennlakken gemäss den Ansprüchen 1 bis 3, dadurch gekennzeichnet, dass 30% bis 70% der Hydroxylgruppen der Epoxidverbindungen mit Monoisocyanat umgesetzt werden.

5. Verwendung der Umsetzungsprodukte aus

A) festen Epoxidharzen mit Äquivalentgewichten von 400 bis 1000 mit

B) monofunktionellen Isocyanaten
für das Verfahren zur Herstellung von Einbrennlacken gemäss den Ansprüchen 1 bis 4.

**Claims**

1. Process for the manufacture of stoving enamels based on acrylate and alkyd resins with the concomitant use of epoxy resins, characterised in that reaction products of:

A) solid epoxy resins having equivalent weights of from 400 to 1000 with

B) monofunctional isocyanates
are used as epoxy resins.

2. Process for the manufacture of stoving enamels according to claim 1, characterised in that reaction products of

A) solid epoxy resins having equivalent weights of from 400 to 550 with

B) phenyl isocyanate are used as epoxy resins.

3. Process for the manufacture of stoving enamels according to claims 1 and 2, characterised in that solid glycidyl ethers based on 4,4'-dihydroxy-2,2-diphenylpropane are used as epoxy resins according to A).

4. Process for the manufacture of stoving enamels according to claims 1 to 3, characterised in that from 30% to 70% of the hydroxy groups in the epoxy compounds are reacted with monoisocyanate.

5. The use of the reaction products of

A) solid epoxy resins having equivalent weights of from 400 to 1000 with

B) monofunctional isocyanates for the process for the manufacture of stoving enamels in accordance with claims 1 to 4.

## Revendications

1. Procédé pour préparer des vernis, des vernis-émaux ou des peintures séchant au four, à base de résines acryliques et alkydes, que l'on obtient en utilisant des résines époxydes, procédé caractérisé en ce qu'on utilise comme résines époxydes des produits de la réaction:

A) de résines époxydes solides ayant des poids d'équivalents de 400 à 1000, avec

B) des isocyanates monofonctionnels.

2. Procédé pour préparer des vernis, des vernis-émaux ou des peintures séchant au four selon la revendication 1, procédé caractérisé en ce qu'on utilise comme résines époxydes des produits de la réaction:

A) de résines époxydes solides ayant des poids d'équivalents de 400 à 550, avec

B) l'isocyanate de phényle.

3. Procédé pour préparer des vernis, des vernis-émaux ou des peintures selon les revendications 1 et 2, caractérisé en ce qu'on utilise comme résines époxydes selon A) des oxydes glycidyliques à base du dihydroxy-4,4' diphényl-2,2 propane.

4. Procédé pour préparer des vernis, des vernis-émaux ou des peintures séchant au four selon l'une quelconque des revendications 1 à 3, caractérisé en ce qu'on fait réagir 30% à 70% des groupes hydroxyle des époxydes avec du monoisocyanate.

5. Utilisation des produits de la réaction:

A) de résines époxydes solides ayant des poids d'équivalents de 400 à 1000, avec

B) des isocyanates monofonctionnels pour le procédé pour préparer des vernis, des vernis-émaux ou des peintures séchant au four selon l'une quelconque des revendications 1 à 4.